(19)

Europäisches
Patentamt
European
Patent Office
Office européen
des brevets

(11) **EP 2 879 061 A2**

(12) **EUROPEAN PATENT APPLICATION**

(43) Date of publication:
03.06.2015 Bulletin 2015/23

(51) Int Cl.:
*G06F 17/21* [(2006.01)]

(21) Application number: 14195227.5

(22) Date of filing: 27.11.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 27.11.2013 CN 201310613054

(71) Applicant: **Xiaomi Inc.**
**Beijing 100085 (CN)**

(72) Inventors:
• **Minghao, Li**
**100085 Haidian District (CN)**
• **Jun, Yuan**
**100085 Haidian District (CN)**
• **Jinxiang, Liang**
**100085 Haidian District (CN)**

(74) Representative: **Sadler, Peter Frederick**
**Reddie & Grose LLP**
**16 Theobalds Road**
**London WC1X 8PL (GB)**

(54) **Method and device for enlarging displayed font**

(57) The present disclosure discloses a method and device for enlarging font, which belongs to the field of communication technology. The method includes: receiving a command for enlarging displayed font; acquiring a size of currently displayed font; when the size of currently displayed font is smaller than a maximum threshold, enlarging the font as per a curve enlargement rule with a first enlargement coefficient configured by an operating system and a second enlargement coefficient configured by a current application; when the size of currently displayed font is larger than or equal to the maximum threshold, enlarging the font as per a linear enlargement rule with a third enlargement coefficient configured by the operating system; and displaying the currently displayed font in a size of the enlarged font. The device includes a receiving module, an acquiring module, an enlarging module and a display module. The present disclosure not only ensures the font to be enlarged more rapidly and appropriately, but also ensures the font not to be blindly enlarged beyond acceptable extent, so as to achieve controllability of font enlargement; the control is flexible, and the application developer's requirements can be adapted.

Fig.1

Printed by Jouve, 75001 PARIS (FR)

**Description**

**TECHNICAL FIELD**

The present disclosure generally relates to the field of communication technology, and more particularly, to a method and a device for enlarging displayed font.

**BACKGROUND**

As more and more people use Android apparatuses, the Android system already has a certain ratio of the middle-aged and old user group. For the middle-aged and old user group, the font size displayed on the screen usually cannot meet their needs, so the demand for large font has become more and more apparent.

At present, the Android system provides a solution for enlarging font, in which the font is enlarged by setting a global scale. In this solution, the font is in linear growth within the interval of [0, +infinity), and is always enlarged mechanically. Although this manner can ensure the font to be enlarged, the font might be blindly enlarged even beyond the extent that can be accepted by people; besides, the font is in linear growth, which is fairly simple, and cannot flexibly adapt to the requirements by the application developers.

**SUMMARY**

The invention is defined in the independent claims to which reference is now directed. Preferred features are set out in the dependent claims.

In view of the above, the present disclosure provides a method and device for enlarging displayed font, so as to improve flexibility of font enlargement, and promote application developer and user's satisfaction. The technical solutions are as follows.

According to a first aspect of embodiments of the present disclosure, there is provided a method for enlarging displayed font, including:

receiving a command for enlarging displayed font;
acquiring a size of currently displayed font;
when the size of the currently displayed font is smaller than a preset maximum threshold, enlarging the currently displayed font as per a curve enlargement rule with a first enlargement coefficient configured by an operating system and a second enlargement coefficient configured by a current application;
when the size of the currently displayed font is larger than or equal to the preset maximum threshold, enlarging the currently displayed font as per a linear enlargement rule with a third enlargement coefficient configured by the operating system; and
displaying the currently displayed font in a size of the enlarged font.

In exemplary embodiments, the enlarging the currently displayed font as per the curve enlargement rule with the first enlargement coefficient configured by the operating system and the second enlargement coefficient configured by the current application includes:

enlarging the currently displayed font as per a parabolic enlargement rule, an elliptical enlargement rule or a circular enlargement rule with the first enlargement coefficient configured by the operating system and the second enlargement coefficient configured by the current application.

In exemplary embodiments, the enlarging the currently displayed font as per the parabolic enlargement rule with the first enlargement coefficient configured by the operating system and the second enlargement coefficient configured by the current application includes:
enlarging the currently displayed font as per the following equation:

$$y^2 = k1 * k2 * x, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In exemplary embodiments, the enlarging the currently displayed font as per the elliptical enlargement rule with the first enlargement coefficient configured by the operating system and the second enlargement coefficient configured by the current application includes:

enlarging the currently displayed font as per the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In exemplary embodiments, the enlarging the currently displayed font as per the circular enlargement rule with the first enlargement coefficient configured by the operating system and the second enlargement coefficient configured by the current application includes:

enlarging the currently displayed font as per the following equation:

$$x^2 + y^2 + k1 * x + k2 * y + C = 0, \qquad x < T;$$

wherein y is a size of the enlarged font, x is the size of currently displayed font, k1 is the first enlargement coefficient configured by the operating system, k2 is the second enlargement coefficient configured by the current application, T is the preset maximum threshold, and C is an optional predetermined value.

In exemplary embodiments, the enlarging the currently displayed font as per the linear enlargement rule with the third enlargement coefficient configured by the operating system includes:

enlarging the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

According to a second aspect of embodiments of the present disclosure, there is provided a device for enlarging displayed font, including:

a receiving module configured to receive a command for enlarging displayed font;
an acquiring module configured to acquire a size of currently displayed font;
an enlarging module configured to, when the size of the currently displayed font is smaller than a preset maximum threshold, enlarge the currently displayed font as per a curve enlargement rule with a first enlargement coefficient configured by an operating system and a second enlargement coefficient configured by a current application; and when the size of the currently displayed font is larger than or equal to the preset maximum threshold, enlarge the currently displayed font as per a linear enlargement rule with a third enlargement coefficient configured by the operating system; and
a display module configured to display the currently displayed font in a size of the enlarged font.

In exemplary embodiments, the enlarging module includes:

a curve enlargement unit configured to enlarge the currently displayed font as per a parabolic enlargement rule, an elliptical enlargement rule or a circular enlargement rule with the first enlargement coefficient configured by the operating system and the second enlargement coefficient configured by the current application.

In exemplary embodiments, the curve enlargement unit is configured to:

enlarge the currently displayed font as per the following equation:

$$y^2 = k1 * k2 * x, \qquad x < T;$$

wherein y is a size of the enlarged font, x is the size of currently displayed font, k1 is the first enlargement coefficient configured by the operating system, k2 is the second enlargement coefficient configured by the current application, and T is the preset maximum threshold.

In exemplary embodiments, the curve enlargement unit is configured to:

enlarge the currently displayed font as per the following equation:

$$\frac{x^2}{k1^2} + \frac{y^2}{k2^2} = 1, \qquad x < T;$$

wherein y is a size of the enlarged font, x is the size of currently displayed font, k1 is the first enlargement coefficient configured by the operating system, k2 is the second enlargement coefficient configured by the current application, and T is the preset maximum threshold.

In exemplary embodiments, the curve enlargement unit is configured to:

enlarge the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

In exemplary embodiments, the enlarging module includes:

a linear enlargement unit configured to enlarge the currently displayed font as per the following equation:

$$y = k3 * x, \qquad x \geq T;$$

wherein y is a size of the enlarged font, x is the size of currently displayed font, k3 is the third enlargement coefficient configured by the operating system, and T is the preset maximum threshold.

According to a third aspect of embodiments of the present disclosure, there is provided a program product having stored therein instructions that, when executed by one or more processors of a terminal, causes the terminal to perform:

receiving a command for enlarging displayed font;
acquiring a size of currently displayed font;
when the size of the currently displayed font is smaller than a preset maximum threshold, enlarging the currently displayed font as per a curve enlargement rule with a first enlargement coefficient configured by an operating system and a second enlargement coefficient configured by a current application;

when the size of the currently displayed font is larger than or equal to the preset maximum threshold, enlarging the currently displayed font as per a linear enlargement rule with a third enlargement coefficient configured by the operating system; and

displaying the currently displayed font in a size of the enlarged font.

Some advantageous effects of the present disclosure may include: font enlargement is achieved by combining two manners of curve enlargement and linear enlargement by receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

It is to be understood that both the foregoing general description and the following detailed description are exemplary only and are not restrictive of the scope of protection, which is defined by the claims.

## BRIEF DESCRIPTION OF THE DRAWINGS

The accompanying drawings illustrate embodiments consistent with the invention and, together with the description, serve to explain the principles of the invention.

Fig. 1 is an exemplary flow chart illustrating a method for enlarging displayed font, according to a first embodiment of the disclosure;

Fig. 2 is an exemplary flow chart illustrating a method for enlarging displayed font, according to a second embodiment of the disclosure;

Fig. 3a is an exemplary flow chart illustrating a method for enlarging displayed font, according to a third embodiment of the disclosure;

Fig. 3b is a diagram illustrating parabolically and linearly enlarged fonts, according to the third embodiment of the disclosure;

Fig. 4a is an exemplary flow chart illustrating a method for enlarging displayed font, according to a fourth embodiment of the disclosure;

Fig. 4b is a diagram illustrating elliptically and linearly enlarged fonts, according to the fourth embodiment of the disclosure;

Fig. 5a is an exemplary flow chart illustrating a method for enlarging displayed font, according to a fifth embodiment of the disclosure;

Fig. 5b is a diagram illustrating circularly and linearly enlarged fonts, according to the fifth embodiment of the disclosure;

Fig. 6a is an exemplary structure diagram illustrating a device for enlarging displayed font, according to a sixth embodiment of the disclosure;

Fig. 6b is another exemplary structure diagram illustrating a device for enlarging displayed font, according to the sixth embodiment of the disclosure; and

Fig. 7 is an exemplary structure diagram illustrating a terminal, according to a seventh embodiment of the disclosure.

The apparent embodiments of the present disclosure are illustrated by the above-mentioned drawings, and detailed descriptions will be given hereinafter. These drawings and descriptions are not intended to limit the scope of protection, which is defined in the claims, but to explain the concept of the present disclosure for those skilled in the art by referring to specific embodiments.

## DETAILED DESCRIPTION

In order to make the purposes, technical solutions and advantages of the present disclosure more clear, hereinafter, the embodiments of the present disclosure will be further described in detail in conjunction with the drawings.

First Embodiment

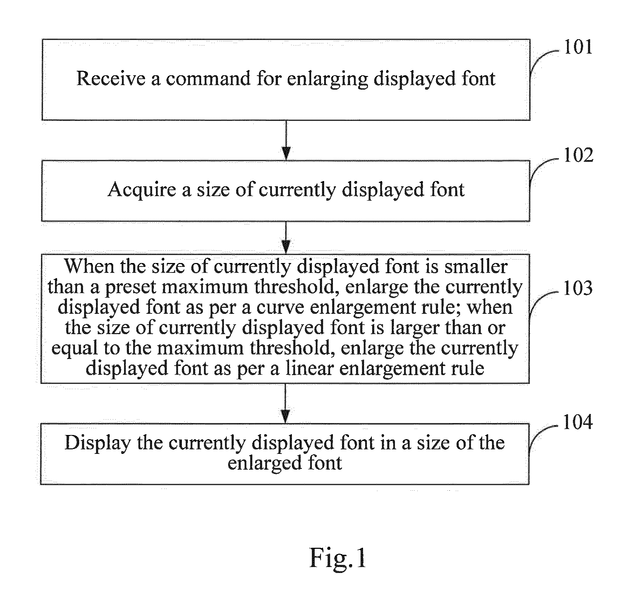

Referring to Fig. 1, the present embodiment provides a method for enlarging displayed font, including the following steps.

In step 101, a command for enlarging displayed font is received.

The command may be triggered by a user, for example, the user clicks to enter a large font mode, etc. The present embodiment has no specific limitations thereto.

In step 102, a size of currently displayed font is acquired.

In step 103, when the size of currently displayed font is smaller than a preset maximum threshold, the currently displayed font is enlarged as per a non-linear curve enlargement rule as a function of the displayed font size with a first enlargement coefficient configured by an operating system and a second enlargement coefficient configured by a current application; and when the size of currently displayed font is larger than or equal to the maximum threshold, the currently displayed font is enlarged as per a linear enlargement rule as a function of the displayed font size with a third enlargement coefficient configured by the operating system.

The maximum threshold may be set as needed, and the present embodiment does not have limitations to the specific value thereof.

The curve enlargement rule means that there is a curve correspondence relationship between the size of the font to be enlarged and the size of the enlarged font. The linear enlargement rule means that there is a linear correspondence relationship between the size of the font to be enlarged and the size of the enlarged font.

In step 104, the currently displayed font is displayed in a size of the enlarged font.

The above method may be applied in an Android apparatus, in which an Android operating system is installed. The Android operating system is configured with a first enlargement coefficient and a third enlargement coefficient for enlarging font. The first enlargement coefficient is used for enlarging font when the size of current font is smaller than a maximum threshold, and the third enlargement coefficient is used for enlarging font when the size of current font is larger than or equal to the maximum threshold. Generally, the amplitude of enlargement provided by the first enlargement coefficient and the third enlargement coefficient is relatively small or conservative, which can basically ensure good appearance and usability of the interface, so the first and third enlargement coefficients may be regarded as safe enlargement coefficients.

The second enlargement coefficient is a coefficient configured by the current application, belonging to a secondary enlargement coefficient. The current application may be any application installed in the Android operating system, and is pre-configured by the application's developer. The second enlargement coefficient may be described in Androidmanifest.xml of the application. Since the second enlargement coefficient is configured by the application's developer, the coefficient is controllable. The magnitude of the second enlargement coefficient may be set as needed, so as to achieve various enlargement effects.

In the present embodiment, the step of enlarging the currently displayed font as per a curve enlargement rule with a first enlargement coefficient configured by an operating system and a second enlargement coefficient configured by a current application may include:

enlarging the currently displayed font as per a parabolic enlargement rule, an elliptical enlargement rule or a circular enlargement rule with the first enlargement coefficient configured by the operating system and the second enlargement coefficient configured by the current application.

The parabolic enlargement rule means that there is a parabolic correspondence relationship between the size of the font to be enlarged and the size of the enlarged font. The elliptical enlargement rule means that there is an elliptical correspondence relationship between the size of the font to be enlarged and the size of the enlarged font. The circular enlargement rule means that there is a circular correspondence relationship between the size of the font to be enlarged and the size of the enlarged font.

In the present embodiment, the step of enlarging the currently displayed font as per a parabolic enlargement rule with the first enlargement coefficient configured by the operating system and the second enlargement coefficient configured by the current application may include:

enlarging the currently displayed font as per the following equation:

$$y^2 = k1 * k2 * x, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In the present embodiment, the step of enlarging the currently displayed font as per an elliptical enlargement rule with the first enlargement coefficient configured by the operating system and the second enlargement coefficient configured by the current application may include:

enlarging the currently displayed font as per the following equation :

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In the present embodiment, the step of enlarging the currently displayed font as per a circular enlargement rule with the first enlargement coefficient configured by the operating system and the second enlargement coefficient configured by the current application may include:

enlarging the currently displayed font as per the following equation :

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

In the present embodiment, the step of enlarging the currently displayed font as per a linear enlargement rule with a third enlargement coefficient configured by the operating system may include:

enlarging the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

In the above method provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Second Embodiment

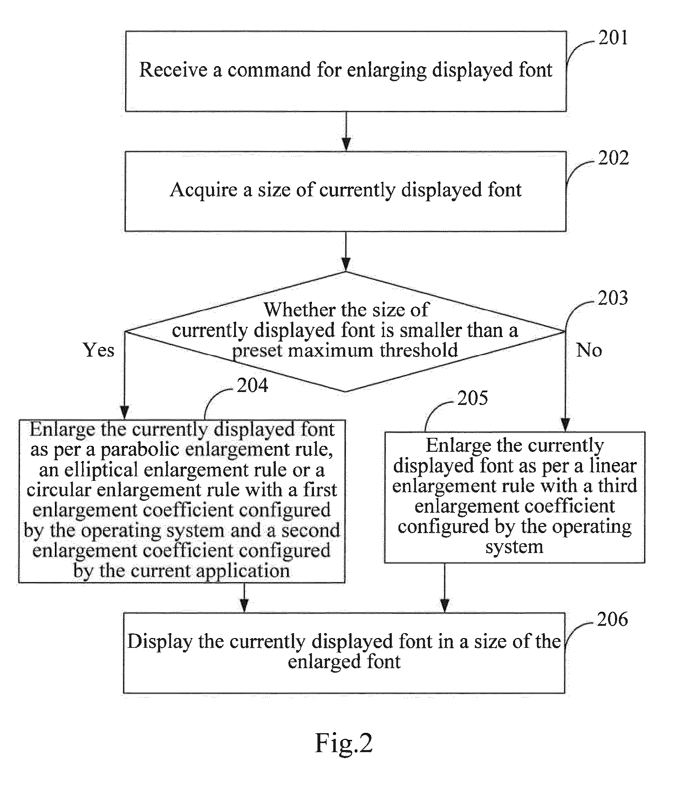

Referring to Fig. 2, the present embodiment provides a method for enlarging displayed font, including the following steps.

In step 201, a command for enlarging displayed font is received.

The command may be triggered by a user, for example, the user clicks to enter a large font mode, etc. The present embodiment has no specific limitations thereto.

In step 202, a size of currently displayed font is acquired.

In step 203, it is judged whether the size of currently displayed font is smaller than a preset maximum threshold; if the size of currently displayed font is smaller than the preset maximum threshold, step 204 is executed; and if the size of currently displayed font is larger than or equal to the preset maximum threshold, step 205 is executed.

In step 204, the currently displayed font is enlarged as per a parabolic enlargement rule, an elliptical enlargement rule or a circular enlargement rule with the first enlargement coefficient configured by the operating system and the second enlargement coefficient configured by the current application, and then step 206 is executed.

The parabolic enlargement rule means that there is a parabolic correspondence relationship between the size of the font to be enlarged and the size of the enlarged font. The elliptical enlargement rule means that there is an elliptical correspondence relationship between the size of the font to be enlarged and the size of the enlarged font. The circular enlargement rule means that there is a circular correspondence relationship between the size of the font to be enlarged and the size of the enlarged font.

In step 205, the currently displayed font is enlarged as per a linear enlargement rule with a third enlargement coefficient configured by the operating system, and then step 206 is executed.

The linear enlargement rule means that there is a linear correspondence relationship between the size of the font to be enlarged and the size of the enlarged font.

In step 206, the currently displayed font is displayed in a size of the enlarged font.

In the above method provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Third Embodiment

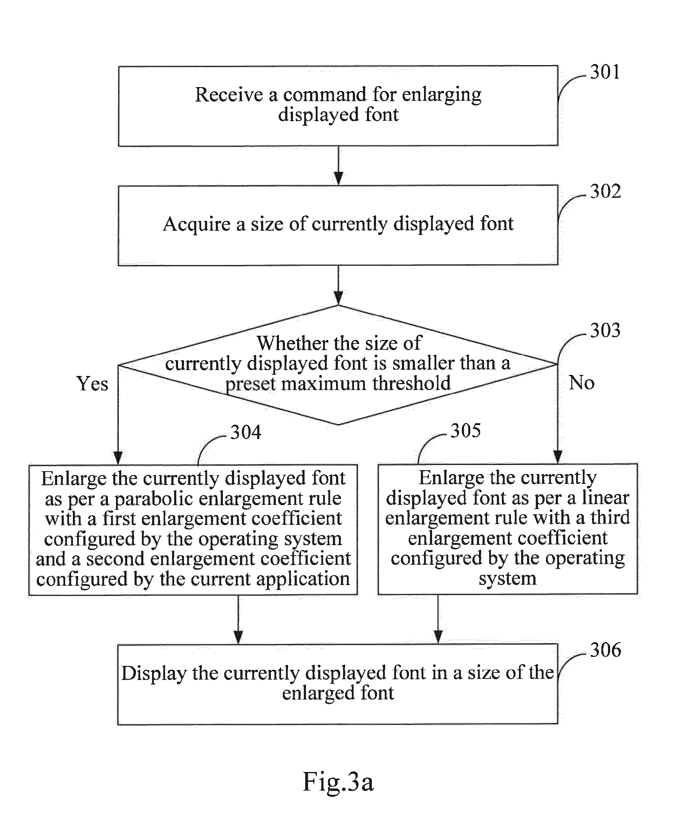

Referring to Fig. 3a, the present embodiment provides a method for enlarging displayed font, which enlarges font using a parabolic enlargement rule and a linear enlargement rule, and the method includes the following steps.

In step 301, a command for enlarging displayed font is received.

The command may be triggered by a user, for example, the user clicks to enter a large font mode, etc. The present embodiment has no specific limitations thereto.

In step 302, a size of currently displayed font is acquired.

In step 303, it is judged whether the size of currently displayed font is smaller than a preset maximum threshold; if the size of currently displayed font is smaller than the preset maximum threshold, step 304 is executed; and if the size of currently displayed font is larger than or equal to the preset maximum threshold, step 305 is executed.

In step 304, the currently displayed font is enlarged as per a parabolic enlargement rule with the first enlargement coefficient configured by the operating system and the second enlargement coefficient configured by the current application, and then step 306 is executed.

The parabolic enlargement rule means that there is a parabolic correspondence relationship between the size of the font to be enlarged and the size of the enlarged font. The currently displayed font is enlarged as per the parabolic enlargement rule by the following equation:

$$y^2 = k1 * k2 * x, \qquad x < T;$$

wherein y is a size of the enlarged font, x is the size of currently displayed font, k1 is the first enlargement coefficient configured by the operating system, k2 is the second enlargement coefficient configured by the current application, and T is the preset maximum threshold.

In step 305, the currently displayed font is enlarged as per a linear enlargement rule with a third enlargement coefficient configured by the operating system, and then step 306 is executed.

The linear enlargement rule means that there is a linear correspondence relationship between the size of the font to be enlarged and the size of the enlarged font. The currently displayed font is enlarged as per the linear enlargement rule by the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

In step 306, the currently displayed font is displayed in a size of the enlarged font.

In the present embodiment, the above preset maximum threshold may be set as needed, for example, may be 20, 30, etc. The present embodiment has no specific limitations thereto.

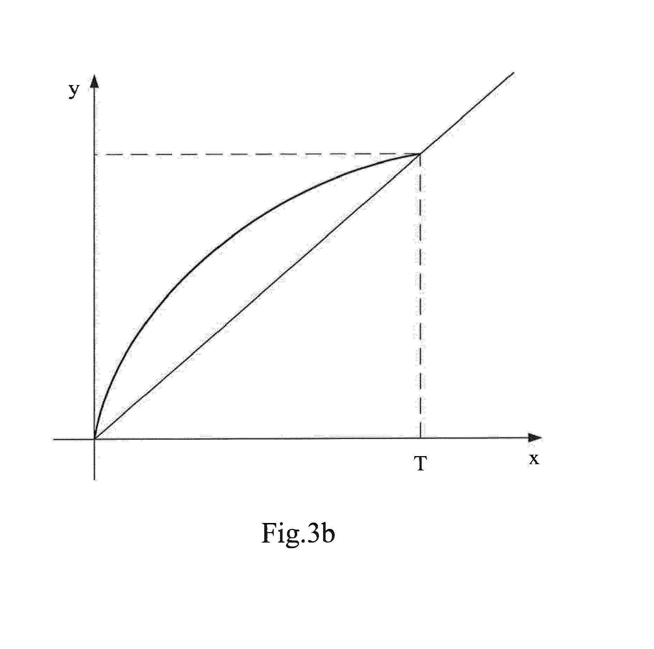

The above parabolic enlargement rule and linear enlargement rule may be shown in Fig. 3b. The curve in the figure is a parabola based on the first enlargement coefficient k1 and the second enlargement coefficient k2, and the straight line in the figure is a straight line based on the third enlargement coefficient k3. When the size of current font is smaller than the maximum threshold T, the font is enlarged as per the parabola; and when the size of current font is larger than or equal to the maximum threshold T, the font is enlarged as per the straight line.

In the above method provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a parabolic enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of parabolic enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Fourth Embodiment

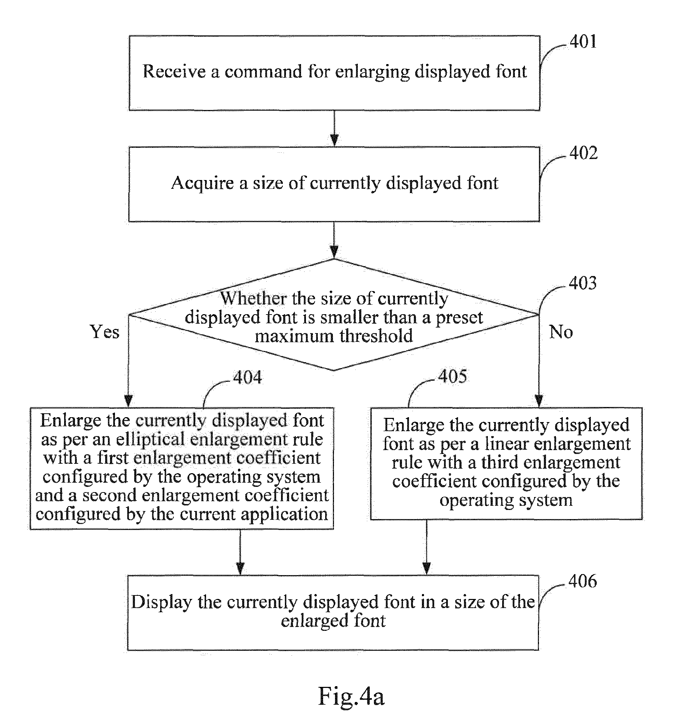

Referring to Fig. 4a, the present embodiment provides a method for enlarging displayed font, which enlarges font using an elliptical enlargement rule and a linear enlargement rule, and the method includes the following steps.

In step 401, a command for enlarging displayed font is received.

The command may be triggered by a user, for example, the user clicks to enter a large font mode, etc. The present embodiment has no specific limitations thereto.

In step 402, a size of currently displayed font is acquired.

In step 403, it is judged whether the size of currently displayed font is smaller than a preset maximum threshold; if the size of currently displayed font is smaller than the preset maximum threshold, step 404 is executed; and if the size of currently displayed font is larger than or equal to the preset maximum threshold, step 405 is executed.

In step 404, the currently displayed font is enlarged as per an elliptical enlargement rule with the first enlargement coefficient configured by the operating system and the second enlargement coefficient configured by the current application, and then step 406 is executed.

The elliptical enlargement rule means that there is an elliptical correspondence relationship between the size of the font to be enlarged and the size of the enlarged font. The currently displayed font is enlarged as per the elliptical enlargement rule by the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In step 405, the currently displayed font is enlarged as per a linear enlargement rule with a third enlargement coefficient configured by the operating system, and then step 406 is executed.

The linear enlargement rule means that there is a linear correspondence relationship between the size of the font to be enlarged and the size of the enlarged font. The currently displayed font is enlarged as per the linear enlargement rule by the following equation:

$$y = k3 * x, \qquad x \geq T;$$

wherein y is a size of the enlarged font, x is the size of currently displayed font, k3 is the third enlargement coefficient configured by the operating system, and T is the preset maximum threshold.

In step 406, the currently displayed font is displayed in a size of the enlarged font.

In the present embodiment, the above preset maximum threshold may be set as needed, for example, may be 20, 40, etc. The present embodiment has no specific limitations thereto.

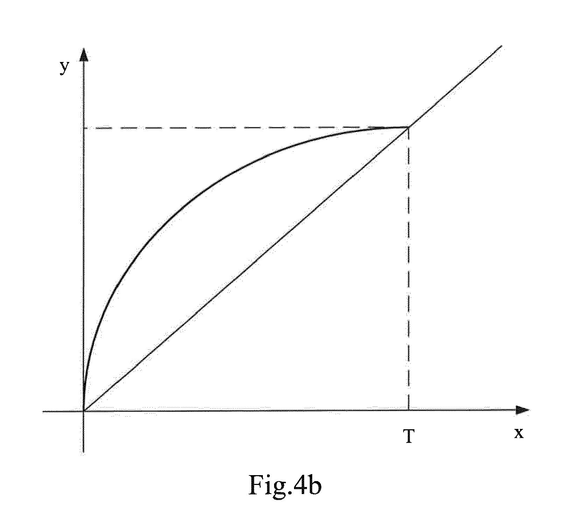

The above elliptical enlargement rule and linear enlargement rule may be shown in Fig. 4b. The curve in the figure is an ellipse based on the first enlargement coefficient k1 and the second enlargement coefficient k2, and the straight line in the figure is a straight line based on the third enlargement coefficient k3. When the size of current font is smaller than the maximum threshold T, the font is enlarged as per the ellipse; and when the size of current font is larger than or equal to the maximum threshold T, the font is enlarged as per the straight line.

In the above method provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per an elliptical enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of elliptical enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Fifth Embodiment

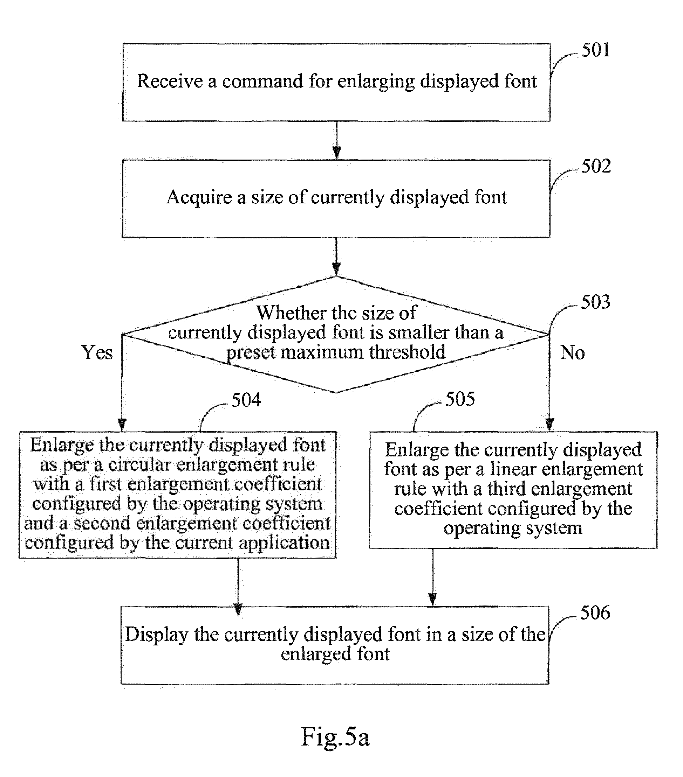

Referring to Fig. 5a, the present embodiment provides a method for enlarging displayed font, which enlarges font using a circular enlargement rule and a linear enlargement rule, and the method includes the following steps.

In step 501, a command for enlarging displayed font is received.

The command may be triggered by a user, for example, the user clicks to enter a large font mode, etc. The present embodiment has no specific limitations thereto.

In step 502, a size of currently displayed font is acquired.

In step 503, it is judged whether the size of currently displayed font is smaller than a preset maximum threshold; if the size of currently displayed font is smaller than the preset maximum threshold, step 504 is executed; and if the size of currently displayed font is larger than or equal to the preset maximum threshold, step 505 is executed.

In step 504, the currently displayed font is enlarged as per a circular enlargement rule with the first enlargement coefficient configured by the operating system and the second enlargement coefficient configured by the current application, and then step 506 is executed.

The circular enlargement rule means that there is a circular correspondence relationship between the size of the font to be enlarged and the size of the enlarged font. The currently displayed font is enlarged as per the circular enlargement rule by the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

In step 505, the currently displayed font is enlarged as per a linear enlargement rule with a third enlargement coefficient configured by the operating system, and then step 506 is executed.

The linear enlargement rule means that there is a linear correspondence relationship between the size of the font to be enlarged and the size of the enlarged font. The currently displayed font is enlarged as per the linear enlargement rule by the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

In step 506, the currently displayed font is displayed in a size of the enlarged font.

In the present embodiment, the above preset maximum threshold may be set as needed, for example, may be 20, 50, etc. The present embodiment has no specific limitations thereto.

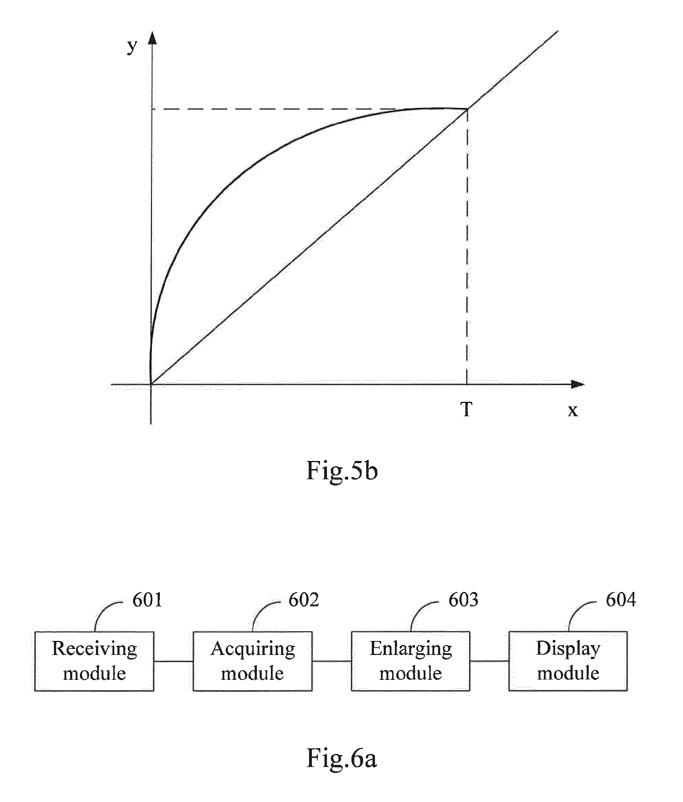

The above circular enlargement rule and linear enlargement rule may be shown in Fig. 5b. The curve in the figure is a circle based on the first enlargement coefficient k1 and the second enlargement coefficient k2, and the straight line in the figure is a straight line based on the third enlargement coefficient k3. When the size of current font is smaller than the maximum threshold T, the font is enlarged as per the circle; and when the size of current font is larger than or equal to the maximum threshold T, the font is enlarged as per the straight line.

In the above method provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a circular enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of circular enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Sixth Embodiment

Referring to Fig. 6a, the present embodiment provides a device for enlarging displayed font, including:

a receiving module 601 configured to receive a command for enlarging displayed font;

an acquiring module 602 configured to acquire a size of currently displayed font;

an enlarging module 603 configured to, when the size of the currently displayed font is smaller than a preset maximum threshold, enlarge the currently displayed font as per a curve enlargement rule with a first enlargement coefficient configured by an operating system and a second enlargement coefficient configured by a current application; and when the size of the currently displayed font is larger than or equal to the preset maximum threshold, enlarge the currently displayed font as per a linear enlargement rule with a third enlargement coefficient configured by the operating system; and

a display module 604 configured to display the currently displayed font in a size of the enlarged font.

The command received by the receiving module 601 may be triggered by a user, for example, the user clicks to enter a large font mode, etc. The present embodiment has no specific limitations thereto.

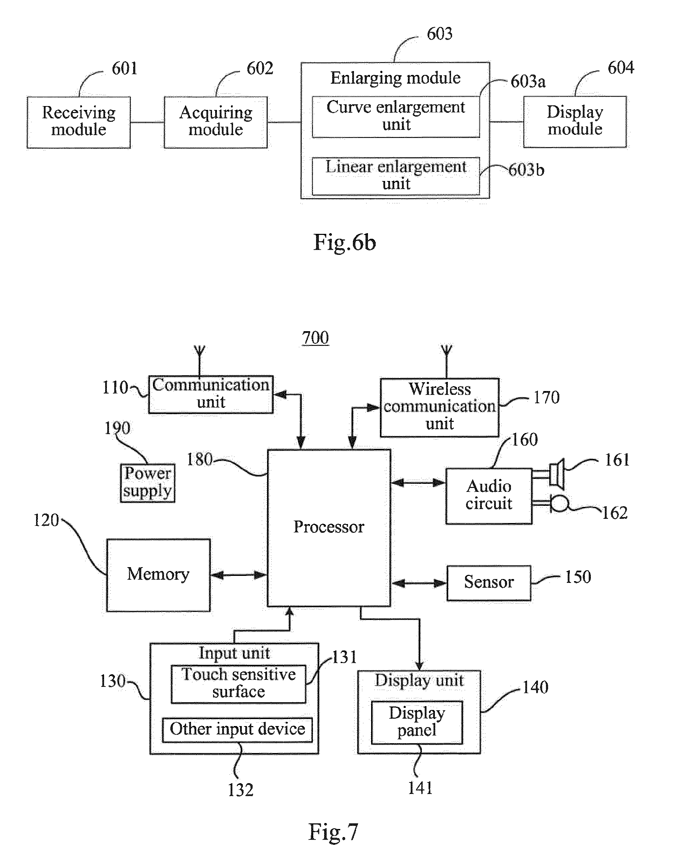

Referring to Fig. 6b, in the present embodiment, the enlarging module 603 may include:

a curve enlargement unit 603a configured to enlarge the currently displayed font as per a parabolic enlargement rule, an elliptical enlargement rule or a circular enlargement rule with the first enlargement coefficient configured by the operating system and the second enlargement coefficient configured by the current application.

The parabolic enlargement rule means that there is a parabolic correspondence relationship between the size of the font to be enlarged and the size of the enlarged font. The elliptical enlargement rule means that there is an elliptical correspondence relationship between the size of the font to be enlarged and the size of the enlarged font. The circular enlargement rule means that there is a circular correspondence relationship between the size of the font to be enlarged and the size of the enlarged font.

In a scenario, the curve enlargement unit 603a may be configured to:

enlarge the currently displayed font as per the following equation:

$$y^2 = k1 * k2 * x, \qquad x < T;$$

wherein y is a size of the enlarged font, x is the size of currently displayed font, k1 is the first enlargement coefficient configured by the operating system, k2 is the second enlargement coefficient configured by the current application, and T is the preset maximum threshold.

In another scenario, the curve enlargement unit 603a may be configured to:

enlarge the currently displayed font as per the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

In yet another scenario, the curve enlargement unit 603a may be configured to:

enlarge the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

Referring to Fig. 6b, in the present embodiment, the enlarging module 603 may include:

a linear enlargement unit 603b configured to enlarge the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

The above device provided by the present embodiment may perform the method provided in any one of the above method embodiments, the detailed procedure of which has been described in the method embodiments, so the description thereof is omitted herein.

The above device may be applied in an Android apparatus, in which an Android operating system is installed. The Android operating system is configured with a first enlargement coefficient and a third enlargement coefficient for enlarging font. The first enlargement coefficient is used for enlarging font when the size of current font is smaller than a maximum threshold, and the third enlargement coefficient is used for enlarging font when the size of current font is larger than or equal to the maximum threshold. Generally, the amplitude enlarged by the first enlargement coefficient and the third enlargement coefficient is relatively conservative, which can basically ensure good appearance and usability of the interface, so the first and third enlargement coefficients may be regarded as safe enlargement coefficients.

The second enlargement coefficient is a coefficient configured by a current application, belonging to a secondary enlargement coefficient. The current application may be any application installed in the Android operating system, and is pre-configured by the application's developer. The second enlargement coefficient may be described in Androidmanifest.xml of the application. Since the second enlargement coefficient is configured by the application's developer, the coefficient is controllable. The magnitude of the second enlargement coefficient may be set as needed, so as to achieve various enlargement effects.

In the above device provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Seventh Embodiment

Referring to Fig. 7, the present embodiment provides a terminal 700, which may include a communication unit 110, a memory 120 including one or more computer-readable storage media, an input unit 130, a display unit 140, a sensor 150, an audio circuit 160, a WiFi (Wireless Fidelity) module 170, a processor 180 including one or more processing cores, and a power supply 190 and other components.

It should be appreciated by those skilled in the art that, the structure of the terminal shown in Fig. 7 does not constitute a limitation to the terminal, and it may include more or fewer components than what is illustrated, or combine some of the components, or have different component arrangements.

The communication unit 110 may be configured to transmit and receive information, or to transmit and receive signal during a call. The communication unit 110 may be a network communication device such as a RF (Radio Frequency) circuit, a router, a modem. In particular, when the communication unit 110 is a RF circuit, the communication unit 110 receives downlink information from a base station, and then transfers the information to one or more processors 180 to be processed. Also, the communication unit 110 transmits uplink data to the base station. Generally, the RF circuit as a communication unit includes, but is not limited to, an antenna, at least one amplifier, a tuner, one or more oscillators, a subscriber identity module (SIM) card, a transceiver, a coupler, an LNA (Low Noise Amplifier), a duplexer, etc. Furthermore, the communication unit 110 may communicate with a network and other apparatuses through wireless communication. The wireless communication may use any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, SMS (Short Messaging Service), etc. The memory 120 may be configured to store software programs and modules. The processor 180 performs various functional applications and data processing by running the software programs and modules stored in the memory 120. The memory 120 may mainly include a program storage area and a data storage area, wherein the program storage area may store operating systems, application programs required by at least one function (such as a function of sound playback, a function of image playback), etc.; and the data storage area may store data created during operation of the terminal 700 (such as audio data, phone book), etc. In addition, the memory 120 may include a high-speed random access memory, and may also include a non-volatile memory, such as at least one disk storage device, a flash memory device, or other volatile solid-state memory devices. Accordingly, the memory 120 may also include a memory controller to provide access to the memory 120 performed by the processor 180 and the input unit 130.

The input unit 130 may be configured to receive information of input numbers or characters, and generate signal inputs from keyboard, mouse, joystick, optical or trackball related to a user setting and the functional control. Optionally, the input unit 130 may include a touch sensitive surface 131 and other input device 132. The touch sensitive surface 131, also known as a touch screen or a track pad, may collect user's touch operations on or near the touch sensitive surface 131 (such as an operation performed by users using any suitable object or accessory such as a finger, a touch pen and the like on or near the touch sensitive surface 131), and drive a corresponding connected device according to a preset program. Optionally, the touch sensitive surface 131 may include two parts of a touch detection device and a touch controller. Here, the touch detection device detects a touching orientation of the user, detects a signal caused by the touch operation, and transmits the signal to the touch controller. The touch controller receives touch information from the touch detection device, transforms it into the touch point coordinate, and sends the transformed information to the processor 180. The touch controller may also receive a command from the processor 180 and execute the command. In addition, the touch sensitive surface 131 may be realized in various types, such as resistive type, capacitive type, infrared type and surface acoustic wave type. In addition to the touch sensitive surface 131, the input unit 130 may also include other input device 132. Optionally, the other input device 132 may include but not limited to one or more of a physical keyboard, a functional key (such as a volume control key, a switch button), a trackball, a mouse, and a joystick.

The display unit 140 may be configured to display information input by the user or information provided to the user and various graphical user interfaces of the terminal 700. These graphical user interfaces may consist of graphics, texts, source display frames, videos, and any combination thereof. The display unit 140 may include a display panel 141, and optionally, the display panel 141 may be configured with LCD (Liquid Crystal Display), OLED (Organic Light-Emitting Diode), etc. Further, the touch sensitive surface 131 may cover the display panel 141. When a touch operation on or near the touch sensitive surface 131 is detected by the touch sensitive surface 131, the touch operation is sent to the processor 180 to determine the type of touch event, and then corresponding visual output will be provided on the display panel 141 by the processor 180 according to the type of touch event. Although in Fig. 7, the touch sensitive surface 131 and the display panel 141 are two separate components to realize input and output functions, in some embodiments, the touch sensitive surface 131 and the display panel 141 may be integrated to realize input and output functions.

The terminal 700 may further include at least one kind of sensor 150, such as a light sensor, a motion sensor and other sensors. Optionally, the light sensor may include an ambient light sensor and a proximity sensor. Here, the ambient light sensor may adjust the brightness of the display panel 141 according to the brightness of the ambient light. The proximity sensor may turn off the display panel 141 and/or backlight when the terminal 700 moves close to ear. As one kind of the motion sensor, a gravity acceleration sensor may detect the magnitude of acceleration in each direction (typically on three axes), and may detect the magnitude and the direction of gravity when it is stationary, which may be used in the applications for recognizing the attitudes of the mobile phone (such as horizontal and vertical screen switching, related games, attitude calibration of a magnetometer), functions related to vibration recognizing (such as a pedometer, clicking), etc. The terminal 700 may also be equipped with other sensors such as a gyroscope, a barometer, a hygrometer, a thermometer, an infrared sensor, etc., which will not be redundantly described herein.

The audio circuit 160, a speaker 161 and a microphone 162 may provide an audio interface between the user and the terminal 700. The audio circuit 160 may transform received audio data into electrical signals which are transmitted to the speaker 161 and transformed into sound signals to be output by the speaker 161. On the other hand, the microphone 162 transforms collected sound signals into electrical signals which are received and transformed into audio data by the audio circuit 160. After being output to the processor 180 to be processed, the audio data is transmitted to, for example, another terminal via the RF circuit 110, or output to the memory 120 for further processing. The audio circuit 160 may also include an ear bud jack to allow a communication between an external earphone and the terminal 700.

In order to achieve wireless communication, the terminal may be equipped with a wireless communication unit 170 which may be a WiFi module. WiFi is a short-range wireless transmission technology. The terminal 700 allows the user to send and receive emails, browse webpages and access streaming media, etc. through the wireless communication unit 170, which provides the user with a wireless broadband Internet access. Although Fig. 7 shows the wireless communication unit 170, it should be understood that, the wireless communication unit 170 is not a necessary component of the terminal 700, and may be omitted as desired without changing the essential scope of the disclosure.

The processor 180 is a control center of the terminal 700, connects various parts of the entire mobile phone through various interfaces and circuits, and performs various functions and data processing of the terminal 700 by running or executing the software programs and/or modules stored in the memory 120 and by invoking data stored in the memory 120, so as to monitor the overall mobile phone. Optionally, the processor 180 may include one or more processing cores. Optionally, the processor 180 may be integrated with an application processor that mainly processes operating systems, user interfaces and application programs, and a modem processor that mainly processes the wireless communication. It should be understood that, the above modem processor may not be integrated into the processor 180.

The terminal 700 may also include a power supply 190 (such as a battery) to supply power to each component. Optionally, the power supply may be logically connected to the processor 180 through a power supply management system, so as to achieve the functions such as charge, discharge and power consumption managements through the power supply management system. The power supply 190 may also include one or more components of a DC or AC power, a recharge system, a power failure detection circuit, a power converter or an inverter, a power status indicator, etc.

Although not shown, the terminal 700 may also include a camera, a Bluetooth module, etc., which are not redundantly described herein.

Optional structures of the terminal 700 have been given above in conjunction with Fig. 7. In order to achieve font enlargement, one or more modules are stored in the memory and configured to be executed by the one or more processors, wherein, the one or more modules have the following functions:

receiving a command for enlarging displayed font;
acquiring a size of currently displayed font;
when the size of currently displayed font is smaller than a preset maximum threshold, enlarging the currently displayed font as per a curve enlargement rule with a first enlargement coefficient configured by an operating system and a second enlargement coefficient configured by a current application;
when the size of currently displayed font is larger than or equal to the maximum threshold, enlarging the currently displayed font as per a linear enlargement rule with a third enlargement coefficient configured by the operating system; and
displaying the currently displayed font in a size of the enlarged font.

The enlarging the currently displayed font as per a curve enlargement rule with a first enlargement coefficient configured by an operating system and a second enlargement coefficient configured by a current application may include:

enlarging the currently displayed font as per a parabolic enlargement rule, an elliptical enlargement rule or a circular enlargement rule with the first enlargement coefficient configured by the operating system and the second enlargement coefficient configured by the current application.

The enlarging the currently displayed font as per a parabolic enlargement rule with the first enlargement coefficient configured by the operating system and the second enlargement coefficient configured by the current application may include:

enlarging the currently displayed font as per the equation below:

$$y^2 = k1 * k2 * x, \qquad x < T;$$

where y is the size of enlarged font, x is the size of currently displayed font, k1 is the first enlargement coefficient configured by the operating system, k2 is the second enlargement coefficient configured by the current application, and T is the maximum threshold.

The enlarging the currently displayed font as per an elliptical enlargement rule with the first enlargement coefficient configured by the operating system and the second enlargement coefficient configured by the current application may include:

enlarging the currently displayed font as per the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

The enlarging the currently displayed font as per a circular enlargement rule with the first enlargement coefficient configured by the operating system and the second enlargement coefficient configured by the current application may include:

enlarging the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

The enlarging the currently displayed font as per a linear enlargement rule with a third enlargement coefficient configured by the operating system may include:

enlarging the currently displayed font as per the following equation:

$$y = k3 * x, \qquad x \geq T;$$

wherein y is a size of the enlarged font, x is the size of currently displayed font, k3 is the third enlargement coefficient configured by the operating system, and T is the preset maximum threshold.

In the above terminal provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application; when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Eighth Embodiment

The present embodiment further provides a nonvolatile readable storage medium in which one or more modules (programs) are stored. When the one or more modules are applied in an apparatus, the apparatus is allowed to execute instructions for the following steps:

receiving a command for enlarging displayed font;
acquiring a size of currently displayed font;
when the size of the currently displayed font is smaller than a preset maximum threshold, enlarging the currently displayed font as per a curve enlargement rule with a first enlargement coefficient configured by an operating system and a second enlargement coefficient configured by a current application;
when the size of the currently displayed font is larger than or equal to the preset maximum threshold, enlarging the currently displayed font as per a linear enlargement rule with a third enlargement coefficient configured by the operating system; and
displaying the currently displayed font in a size of the enlarged font.

The enlarging the currently displayed font as per a curve enlargement rule with a first enlargement coefficient configured by an operating system and a second enlargement coefficient configured by a current application may include:

enlarging the currently displayed font as per a parabolic enlargement rule, an elliptical enlargement rule or a circular enlargement rule with the first enlargement coefficient configured by the operating system and the second enlargement coefficient configured by the current application.

The enlarging the currently displayed font as per a parabolic enlargement rule with the first enlargement coefficient configured by the operating system and the second enlargement coefficient configured by the current application may include:

enlarging the currently displayed font as per the following equation:

$$y^2 = k1 * k2 * x, \qquad x < T;$$

Wherein y is a size of the enlarged font, x is the size of the currently displayed font, k1 is the first enlargement coefficient configured by the operating system, k2 is the second enlargement coefficient configured by the current application, and T is the preset maximum threshold.

The enlarging the currently displayed font as per an elliptical enlargement rule with the first enlargement coefficient configured by the operating system and the second enlargement coefficient configured by the current application may include:

enlarging the currently displayed font as per the following equation:

$$\frac{x^2}{k1^2} + \frac{y^2}{k2^2} = 1, \qquad x < T;$$

Wherein y is a size of the enlarged font, x is the size of the currently displayed font, k1 is the first enlargement coefficient configured by the operating system, k2 is the second enlargement coefficient configured by the current application, and T is the preset maximum threshold.

The enlarging the currently displayed font as per a circular enlargement rule with the first enlargement coefficient configured by the operating system and the second enlargement coefficient configured by the current application may include:

enlarging the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, T is the preset maximum threshold, and C is an optional predetermined value.

The enlarging the currently displayed font as per a linear enlargement rule with a third enlargement coefficient configured by the operating system may include:

enlarging the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

In the above nonvolatile readable storage medium provided by the present embodiment, font enlargement is achieved by combining two manners of curve enlargement and linear enlargement by: receiving a command for enlarging displayed font; acquiring a size of currently displayed font; when the size of currently displayed font is smaller than a preset maximum threshold, enlarging the currently displayed font as per a curve enlargement rule with a first enlargement coefficient configured by an operating system and a second enlargement coefficient configured by a current application;

when the size of currently displayed font is larger than or equal to the maximum threshold, enlarging the currently displayed font as per a linear enlargement rule with a third enlargement coefficient configured by the operating system; and displaying the currently displayed font in a size of the enlarged font. The manner of curve enlargement can ensure the font to be enlarged more rapidly and appropriately, the manner of linear enlargement can ensure the font not to be blindly enlarged beyond acceptable extent, so as to ensure good appearance of the font and integrity of the interface; moreover, the combination of the two manners can effectively avoid jump change of font size during font enlargement, so as to achieve controllability of font enlargement, and the control is relatively flexible, so the application developer's requirements can be adapted.

Those skilled in the art can understand that, the whole or part of the steps for achieving the above-described embodiments can be accomplished by hardware, or be accomplished by a program instructing relevant hardware, the program may be stored in a computer readable storage medium, and the above-mentioned storage medium may be a read-only memory, a magnetic disc or an optical disc, etc.

**Claims**

1. A method for enlarging displayed font, **characterized in that**, the method comprises:

   receiving (101, 201, 301, 401, 501) a command for enlarging displayed font;
   acquiring (102, 202, 302, 402, 502) a size of currently displayed font;
   when the size of the currently displayed font is smaller than a preset maximum threshold, enlarging (103, 204, 304, 404, 504) the currently displayed font as per a curve enlargement rule with a first enlargement coefficient configured by an operating system and a second enlargement coefficient configured by a current application;
   when the size of the currently displayed font is larger than or equal to the preset maximum threshold, enlarging (103, 205, 305, 405, 505) the currently displayed font as per a linear enlargement rule with a third enlargement coefficient configured by the operating system; and
   displaying (104, 206, 306, 406, 506) the currently displayed font in a size of the enlarged font.

2. The method according to claim 1, **characterized in that**, enlarging the currently displayed font as per the curve enlargement rule with the first enlargement coefficient configured by the operating system and the second enlargement coefficient configured by the current application comprises:

   enlarging the currently displayed font as per a parabolic enlargement rule, an elliptical enlargement rule or a circular enlargement rule with the first enlargement coefficient configured by the operating system and the second enlargement coefficient configured by the current application.

3. The method according to claim 2, **characterized in that**, enlarging the currently displayed font as per the parabolic enlargement rule with the first enlargement coefficient configured by the operating system and the second enlargement coefficient configured by the current application comprises:

   enlarging the currently displayed font as per the following equation:

$$y^2 = k1 * k2 * x, \qquad x < T;$$

   wherein y is a size of the enlarged font, x is the size of the currently displayed font, k1 is the first enlargement coefficient configured by the operating system, k2 is the second enlargement coefficient configured by the current application, and T is the preset maximum threshold.

4. The method according to claim 2, **characterized in that**, enlarging the currently displayed font as per the elliptical enlargement rule with the first enlargement coefficient configured by the operating system and the second enlargement coefficient configured by the current application comprises:

   enlarging the currently displayed font as per the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

5. The method according to claim 2, **characterized in that**, enlarging the currently displayed font as per the circular enlargement rule with the first enlargement coefficient configured by the operating system and the second enlargement coefficient configured by the current application comprises:

enlarging the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

6. The method according to any of claims 1 to 5, **characterized in that**, enlarging the currently displayed font as per the linear enlargement rule with the third enlargement coefficient configured by the operating system comprises:

enlarging the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

7. A device for enlarging displayed font comprising:

a receiving module (130, 601) configured to receive a command for enlarging displayed font;
an acquiring module (180, 602) configured to acquire a size of currently displayed font;
an enlarging module (180, 603) configured to, when the size of the currently displayed font is smaller than a preset maximum threshold, enlarge the currently displayed font as per a curve enlargement rule with a first enlargement coefficient configured by an operating system and a second enlargement coefficient configured by a current application; and when the size of the currently displayed font is larger than or equal to the preset maximum threshold, enlarge the currently displayed font as per a linear enlargement rule with a third enlargement coefficient configured by the operating system; and
a display module (140, 604) configured to display the currently displayed font in a size of the enlarged font.

8. The device according to claim 7, **characterized in that**, the enlarging module comprises:

a curve enlargement unit (603a) configured to enlarge the currently displayed font as per a parabolic enlargement rule, an elliptical enlargement rule or a circular enlargement rule with the first enlargement coefficient configured by the operating system and the second enlargement coefficient configured by the current application.

9. The device according to claim 8, **characterized in that**, the curve enlargement unit is configured to:

enlarge the currently displayed font as per the following equation:

$$y^2 = k1 * k2 * x, \qquad x < T;$$

Wherein y is a size of the enlarged font, x is the size of the currently displayed font, k1 is the first enlargement coefficient configured by the operating system, k2 is the second enlargement coefficient configured by the current application, and T is the preset maximum threshold.

**10.** The device according to claim 8, **characterized in that**, the curve enlargement unit is configured to:

enlarge the currently displayed font as per the following equation:

$$\frac{x^2}{k1^2} + \frac{y^2}{k2^2} = 1, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

**11.** The device according to claim 8, **characterized in that**, the curve enlargement unit is configured to:

enlarge the currently displayed font as per the following equation:

$$x^2 + y^2 + k1 * x + k2 * y + C = 0, \qquad x < T;$$

wherein y is a size of the enlarged font, x is the size of the currently displayed font, k1 is the first enlargement coefficient configured by the operating system, k2 is the second enlargement coefficient configured by the current application, and T is the preset maximum threshold.

**12.** The device according to any of claims 7 to 11, **characterized in that**, the enlarging module comprises:

a linear enlargement unit (603b) configured to enlarge the currently displayed font as per the following equation:

$$y = k3 * x, \qquad x \geq T;$$

wherein y is a size of the enlarged font, x is the size of the currently displayed font, k3 is the third enlargement coefficient configured by the operating system, and T is the preset maximum threshold.

**13.** A program product having stored therein instructions that, when executed by one or more processors of a terminal, causes the terminal to perform the steps of:

receiving (101, 201, 301, 401, 501) a command for enlarging displayed font;
acquiring (102, 202, 302, 402, 502) a size of currently displayed font;
when the size of the currently displayed font is smaller than a preset maximum threshold, enlarging (103, 204, 304, 404, 504) the currently displayed font as per a curve enlargement rule with a first enlargement coefficient configured by an operating system and a second enlargement coefficient configured by a current application;
when the size of the currently displayed font is larger than or equal to the preset maximum threshold, enlarging (103, 205, 305, 405, 505) the currently displayed font as per a linear enlargement rule with a third enlargement coefficient configured by the operating system; and
displaying (104, 206, 306, 406, 506) the currently displayed font in a size of the enlarged font.

Receive a command for enlarging displayed font 101

Acquire a size of currently displayed font 102

When the size of currently displayed font is smaller than a preset maximum threshold, enlarge the currently displayed font as per a curve enlargement rule; when the size of currently displayed font is larger than or equal to the maximum threshold, enlarge the currently displayed font as per a linear enlargement rule 103

Display the currently displayed font in a size of the enlarged font 104

Fig.1

Receive a command for enlarging displayed font — 201

Acquire a size of currently displayed font — 202

Whether the size of currently displayed font is smaller than a preset maximum threshold — 203

Yes

No

204

Enlarge the currently displayed font as per a parabolic enlargement rule, an elliptical enlargement rule or a circular enlargement rule with a first enlargement coefficient configured by the operating system and a second enlargement coefficient configured by the current application

205

Enlarge the currently displayed font as per a linear enlargement rule with a third enlargement coefficient configured by the operating system

Display the currently displayed font in a size of the enlarged font — 206

Fig.2

```
┌─────────────────────────────────────────────────┐
│          Receive a command for enlarging        │⟋ 301
│                 displayed font                  │
└─────────────────────────────────────────────────┘
                        │
                        ▼
┌─────────────────────────────────────────────────┐
│                                                 │⟋ 302
│      Acquire a size of currently displayed font │
└─────────────────────────────────────────────────┘
                        │
                        ▼
              ╱─────────────────────╲
            ╱   Whether the size of   ╲        ⟋ 303
Yes ◄─────╱ currently displayed font is smaller than a ╲─────► No
          ╲    preset maximum threshold   ╱
            ╲─────────────────────╱
   │            ⟋ 304          ⟋ 305              │
   ▼                                              ▼
┌────────────────────────────────┐  ┌────────────────────────────────┐
│ Enlarge the currently displayed│  │     Enlarge the currently      │
│ font as per a parabolic        │  │  displayed font as per a linear│
│ enlargement rule with a first  │  │ enlargement rule with a third  │
│ enlargement coefficient        │  │   enlargement coefficient      │
│ configured by the operating    │  │   configured by the operating  │
│ system and a second enlargement│  │            system              │
│ coefficient configured by the  │  │                                │
│ current application            │  │                                │
└────────────────────────────────┘  └────────────────────────────────┘
            │                                     │
            ▼                                     ▼
┌─────────────────────────────────────────────────┐
│ Display the currently displayed font in a size  │⟋ 306
│ of the enlarged font                            │
└─────────────────────────────────────────────────┘
```

Fig.3a

Fig.3b

Receive a command for enlarging displayed font ⟋⎯401

Acquire a size of currently displayed font ⟋⎯402

Whether the size of currently displayed font is smaller than a preset maximum threshold ⟋⎯403

Yes

No

Enlarge the currently displayed font as per an elliptical enlargement rule with a first enlargement coefficient configured by the operating system and a second enlargement coefficient configured by the current application ⟋⎯404

Enlarge the currently displayed font as per a linear enlargement rule with a third enlargement coefficient configured by the operating system ⟋⎯405

Display the currently displayed font in a size of the enlarged font ⟋⎯406

Fig.4a

Fig.4b

Receive a command for enlarging displayed font ⌐501

Acquire a size of currently displayed font ⌐502

Whether the size of
currently displayed font is smaller than a
preset maximum threshold ⌐503

Yes

No

⌐504

Enlarge the currently displayed font
as per a circular enlargement rule
with a first enlargement coefficient
configured by the operating system
and a second enlargement coefficient
configured by the current application

⌐505

Enlarge the currently displayed
font as per a linear enlargement
rule with a third enlargement
coefficient configured by the
operating system

Display the currently displayed font in a size of the
enlarged font ⌐506

Fig.5a

Fig.5b

Fig.6a

601 602 603

Receiving module — Acquiring module — Enlarging module

603
Enlarging module

603a
Curve enlargement unit

603b
Linear enlargement unit

604
Display module

Fig.6b

700

110 — Communication unit

170 — Wireless communication unit

190 — Power supply

180 — Processor

160 — Audio circuit

161

162

120 — Memory

150 — Sensor

130 — Input unit

131 — Touch sensitive surface

132 — Other input device

140 — Display unit

141 — Display panel

Fig.7